(19) Europäisches Patentamt
European Patent Office
Office européen des brevets

(11) EP 4 597 207 A1

(12) EUROPEAN PATENT APPLICATION
published in accordance with Art. 153(4) EPC

(43) Date of publication:
06.08.2025 Bulletin 2025/32

(51) International Patent Classification (IPC):
G02B 30/56 (2020.01)    G02B 5/00 (2006.01)
G09F 9/00 (2006.01)

(21) Application number: 23871947.0

(22) Date of filing: 13.09.2023

(52) Cooperative Patent Classification (CPC):
G02B 5/00; G02B 30/56; G09F 9/00

(86) International application number:
PCT/JP2023/033452

(87) International publication number:
WO 2024/070714 (04.04.2024 Gazette 2024/14)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 29.09.2022 JP 2022156786
28.12.2022 JP 2022212756

(71) Applicant: Kyocera Corporation
Kyoto-shi, Kyoto 612-8501 (JP)

(72) Inventors:
• KAWANISHI, Hiroyoshi
  Kyoto-shi, Kyoto 612-8501 (JP)
• TADAUCHI, Ryo
  Kyoto-shi, Kyoto 612-8501 (JP)
• SHIMOSE, Kazuki
  Kyoto-shi, Kyoto 612-8501 (JP)

(74) Representative: TBK
Bavariaring 4-6
80336 München (DE)

(54) **AERIAL IMAGE DISPLAY APPARATUS**

(57) An aerial image display device includes a display, a first concave mirror, a second concave mirror, and a light shield. The display includes a display surface. The first concave mirror reflects, in a direction different from a direction toward the display, image light emitted from the display surface. The second concave mirror reflects, in a direction different from a direction toward the first concave mirror, the image light reflected from the first concave mirror and forms an aerial image as a real image from the image light. The light shield is between the display and the second concave mirror. The light shield is located off an optical path of the image light extending from the display surface to the aerial image through the first concave mirror and the second concave mirror.

FIG. 1

**Description**

TECHNICAL FIELD

The present disclosure relates to an aerial image display device.

BACKGROUND OF INVENTION

A known aerial image display device is described in, for example, Patent Literature 1.

CITATION LIST

PATENT LITERATURE

Patent Literature 1: WO 2018/043673

SUMMARY

In an aspect of the present disclosure, an aerial image display device includes a display, a first concave mirror, a second concave mirror, and a light shield. The display includes a display surface. The first concave mirror reflects, in a direction different from a direction toward the display, image light emitted from the display surface. The second concave mirror reflects, in a direction different from a direction toward the first concave mirror, the image light reflected from the first concave mirror and forms an aerial image as a real image from the image light. The light shield is between the display and the second concave mirror. The light shield is located off an optical path of the image light extending from the display surface to the aerial image through the first concave mirror and the second concave mirror.

In another aspect of the present disclosure, an aerial image display device includes a display, a first concave mirror, a convex mirror, a second concave mirror, and a light shield. The display includes a display surface. The first concave mirror reflects, in a direction different from a direction toward the display, image light emitted from the display surface. The convex mirror reflects, in a direction different from a direction toward the first concave mirror, the image light reflected from the first concave mirror. The second concave mirror reflects, in a direction different from a direction toward the convex mirror, the image light reflected from the convex mirror and forms an aerial image as a real image from the image light. The light shield is between the display and the second concave mirror. The light shield is located off an optical path of the image light extending from the display surface to the aerial image through the first concave mirror, the convex mirror, and the second concave mirror. The convex mirror is between the light shield and the second concave mirror.

In still another aspect of the present disclosure, an aerial image display device includes a display, a first concave mirror, a second concave mirror, and a focusing member. The display includes a display surface. The first concave mirror reflects, in a direction different from a direction toward the display, image light emitted from the display surface. The second concave mirror reflects, in a direction different from a direction toward the first concave mirror, the image light reflected from the first concave mirror and forms an aerial image as a real image from the image light. The focusing member is between the display and the first concave mirror. The focusing member collimates the image light emitted from the display surface.

BRIEF DESCRIPTION OF THE DRAWINGS

The objects, features, and advantages of the present disclosure will become more apparent from the following detailed description and the drawings.

FIG. 1 is a cross-sectional view of an aerial image display device according to an embodiment of the present disclosure, illustrating its main components.
FIG. 2 is a cross-sectional view of a first concave mirror in the aerial image display device in FIG. 1, describing the curvature of the first concave mirror.
FIG. 3 is a cross-sectional view of an aerial image display device according to another embodiment of the present disclosure, illustrating its main components.
FIG. 4 is a cross-sectional view of an aerial image display device according to still another embodiment of the present disclosure, illustrating its main components.

DESCRIPTION OF EMBODIMENTS

A known aerial image display device described in Patent Literature 1 forms an aerial image as a real image from image light emitted from a display using optical elements such as a beam splitter and a retroreflective plate.

Such a known aerial image display device may have image light partially directed in an unintended direction and to an unintended position by the optical elements and may form a ghost image or a virtual image viewable with the eyes of a user, thus lowering the viewability of the aerial image.

One or more embodiments of the present disclosure will now be described with reference to the drawings. The drawings used hereafter illustrate the main components of an aerial image display device according to one or more embodiments of the present disclosure. The aerial image display device according to one or more embodiments may include known components that are not illustrated, such as a housing and an optical system support. The drawings used hereafter are schematic and are not necessarily drawn to scale relative to the actual size of each component.

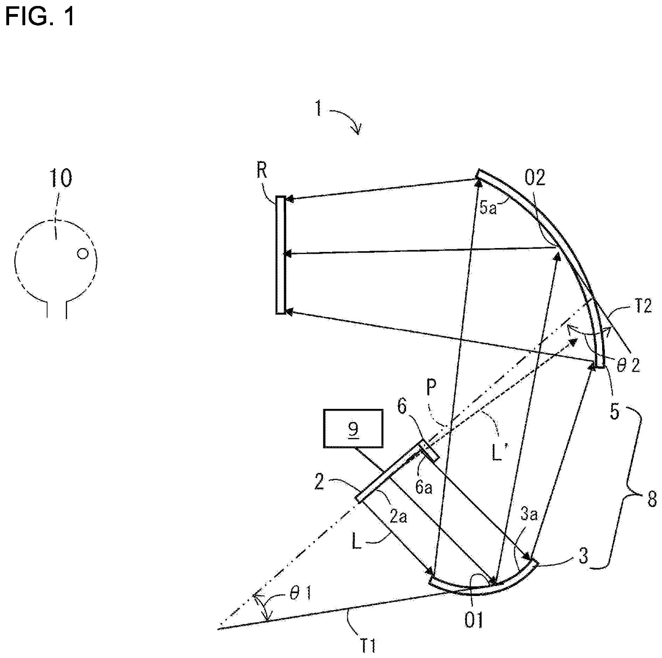

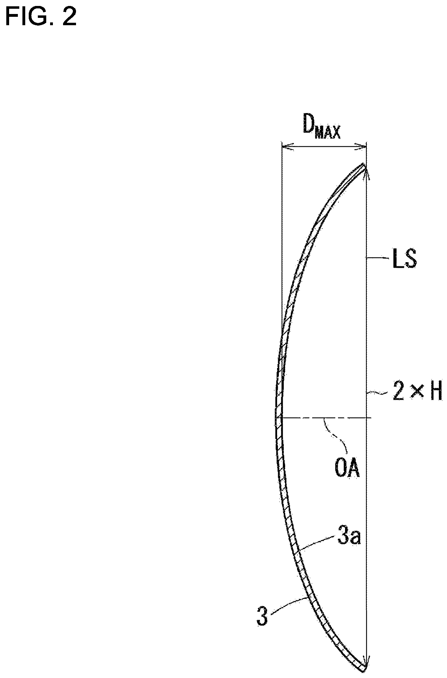

FIG. 1 is a cross-sectional view of an aerial image display device according to an embodiment of the present disclosure, illustrating its main components. FIG. 2 is a cross-sectional view of a first concave mirror in the aerial image display device in FIG. 1, describing the curvature of the first concave mirror.

As illustrated in FIG. 1, an aerial image display device 1 according to the present embodiment includes a display 2, a first concave mirror 3, a second concave mirror 5, and a light shield 6.

The display 2 includes a display surface 2a and displays an image that propagates as image light L on the display surface 2a. In other words, the display 2 emits the image light L from the display surface 2a.

The display 2 may be a transmissive display. The transmissive display may be, for example, a liquid crystal display including a backlight and a liquid crystal panel. The backlight may be a direct backlight including multiple light sources arranged two-dimensionally on a rear surface of the liquid crystal panel. The backlight may be an edge-lit backlight including multiple light sources arranged on an outer periphery of the liquid crystal panel. The edge-lit backlight may include, for example, a lens array, a light guide plate, or a diffuser plate for uniformly irradiating the liquid crystal panel. The light sources in the backlight may be, for example, light-emitting diode (LED) elements, cold cathode fluorescent lamps, halogen lamps, or xenon lamps. The liquid crystal panel may be a known liquid crystal panel. The known liquid crystal panel may be, for example, an in-plane switching (IPS) panel, a fringe field switching (FFS) panel, a vertical alignment (VA) panel, an electrically controlled birefringence (ECB) panel, or another liquid crystal panel.

The transmissive display is not limited to a liquid crystal display. The transmissive display may be, for example, a microelectromechanical systems (MEMS) shutter display including a backlight and a MEMS shutter.

The display 2 is not limited to the transmissive display. The display 2 may be a self-luminous display including a light emitter such as an LED element, an organic electroluminescent (OEL) element, an organic LED (OLED) element, or a semiconductor laser diode (LD) element.

A reflective optical system including the first concave mirror 3 and the second concave mirror 5 forms an aerial image R from the image light L emitted from the display 2. The first concave mirror 3 and the second concave mirror 5 may be hereafter collectively referred to as a reflective optical system 8.

The first concave mirror 3 is located on an optical path of the image light L emitted from the display 2. The first concave mirror 3 is configured to reflect, in a direction different from a direction toward the display 2, the image light L emitted from the display 2. The first concave mirror 3 may include an adjuster to adjust its spatial arrangement relative to the display 2 (e.g., the distance from the display surface 2a and the tilt angle with respect to the display surface 2a). The adjuster may include, for example, a support such as a rod located on a rear surface of the first concave mirror 3, a shaft located on the support to rotate the support and the first concave mirror 3, and a slider to translate the support and the first concave mirror 3. The adjuster may be manually adjustable, or electrically adjustable with, for example, a stepping motor.

The second concave mirror 5 is located on the optical path of the image light L reflected from the first concave mirror 3. The second concave mirror 5 is configured to reflect, in a direction different from a direction toward the first concave mirror 3, the image light L reflected from the first concave mirror 3 and form the aerial image R as a real image. The second concave mirror 5 may include an adjuster to adjust its spatial arrangement relative to the first concave mirror 3 (e.g., the distance from the first concave mirror 3 and the tilt angle with respect to the first concave mirror 3). This adjuster may have the same structure as or a similar structure to the adjuster in the first concave mirror 3.

The first concave mirror 3 includes a reflective surface 3a. The second concave mirror 5 includes a reflective surface 5a. The first concave mirror 3 and the second concave mirror 5 may be freeform mirrors respectively including the reflective surfaces 3a and 5a as freeform surfaces. The first concave mirror 3 and the second concave mirror 5 that are freeform mirrors may respectively include the reflective surfaces 3a and 5a shaped appropriately to reduce distortion of the aerial image R.

The reflective surfaces 3a and 5a as freeform surfaces may be XY polynomial surfaces (also referred to as an SPS XYP surfaces) defined by Formulas 1 and 2 below. The XY polynomial surfaces are expressed by polynomials of up to the tenth degree to be added to a conic reference surface. Thus, in Formulas 1 and 2, the sum of m and n is less than or equal to 10. In Formula 1, z is the sag of a surface parallel to a Z-axis (also referred to as the optical axis), c is a vertex curvature, k is a conic constant, r satisfies $r^2 = x^2 + y^2$, and $C_j$ is a coefficient of a monomial $x^m y^n$.

3

$$z = \frac{cr^2}{1 + \sqrt{1 - (1 + k)c^2 r^2}} + \sum_{j=2}^{66} C_j x^m y^n \qquad (1)$$

$$j = \frac{(m + n)^2 + m + 3n}{2} + 1 \qquad (2)$$

The light shield 6 is located between the display 2 and the second concave mirror 5. The light shield 6 is located off the optical path of the image light L extending from the display surface 2a to the aerial image R through the first concave mirror 3 and the second concave mirror 5. The light shield 6 blocks image light L' traveling directly from the display surface 2a to the second concave mirror 5. The aerial image display device 1 thus effectively reduces the likelihood that the image light L emitted from the display surface 2a reaches the second concave mirror 5 without being reflected from the first concave mirror 3 and is reflected from the second concave mirror 5 in an unintended direction and to an unintended position. This reduces the likelihood of a ghost image or a virtual image being viewed with the eyes of a user 10 and lowering the viewability of the aerial image R.

Note that the image light L' traveling directly from the display surface 2a to the second concave mirror 5 is more likely to occur in recent devices in which the viewing angle of the image light L from the display 2 is closer to ±180°. This increases the likelihood of a ghost image and a virtual image being viewed. This issue is reduced or eliminated by the aerial image display device according to one or more embodiments of the present disclosure.

The light shield 6 may be located closer to the display 2 between the display 2 and the second concave mirror 5 to avoid being upsized and to block the image light L' traveling directly from the display surface 2a to the second concave mirror 5. The light shield 6 may be in contact with the display 2.

The light shield 6 may be located along at least a peripheral portion of the display surface 2a, such as a portion of the display surface 2a closer to the second concave mirror 5. For the display surface 2a being rectangular, the light shield 6 may be located along one end or two ends of the display surface 2a closer to the second concave mirror 5. The light shield 6 may extend from an imaginary plane including the display surface 2a in a direction in which the image light L is emitted from the display surface 2a. The light shield 6 may extend in a direction perpendicular to the display surface 2a. The light shield 6 can avoid being upsized and can block the image light L' traveling directly from the display surface 2a to the second concave mirror 5 effectively.

The light shield 6 may be made of a metal material such as aluminum, magnesium, copper, or zinc, or of an alloy material such as stainless steel, a copper-zinc alloy, or an aluminum-copper alloy. The light shield 6 may include, as a surface 6a (also referred to as a light-blocking surface) facing the display surface 2a, a rough surface or a finely uneven structure. The light-blocking surface 6a may further include a light-absorbing layer. In such structures, the image light L reaching the light-blocking surface 6a is less likely to be reflected from the light-blocking surface 6a, thus reducing stray light more effectively. The finely uneven structure may have an arithmetic mean roughness of about 1 to 100 nm, or about 10 to 55 nm (about 1/10 of the visible-light center wavelength of 555 nm), but the range is not limited to these.

The light-absorbing layer formed on the light-blocking surface 6a may be made of a resin material (e.g., an epoxy resin, a silicone resin, or an acrylic resin) containing a light-absorbing material. The light-absorbing material may be an inorganic pigment. The inorganic pigment may be a carbon pigment such as carbon black, a nitride pigment such as titanium black, a metal oxide pigment such as a Cr-Fe-Co, Cu-Co-Mn (manganese) pigment, an Fe-Co-Mn pigment, or an Fe-Co-Ni-Cr pigment. The light-absorbing layer on the light-blocking surface 6a may include a surface with a finely uneven structure to more easily absorb the image light L reaching the light-blocking surface 6a. The finely uneven structure may include a rough surface with a surface roughness (arithmetic mean roughness) of about 1/10 (about 55 nm) of the visible-light center wavelength of about 550 nm, or may be a rough surface with a surface roughness (arithmetic mean roughness) of about 55 nm or less. For example, the finely uneven structure may have an arithmetic mean roughness of about 1 to 100 nm, or about 10 to 55 nm, but the range is not limited to these.

The light shield 6 may have electrically adjustable light transmittance. For example, the light shield 6 may be a liquid crystal shutter (also referred to as a liquid crystal window or LCW) including a polymer liquid crystal. In this case, the liquid crystal shutter receives an off-voltage (voltage for blocking light) to function as the light shield 6. The liquid crystal shutter receives a voltage that is intermediate between an off-voltage and an on-voltage to control the light transmittance (light-shielding property) of the light shield 6. The light transmittance of the light shield 6 may be about 0 to 90%, or about 5 to 80%, but the range is not limited to these.

The light shield 6 may be an electrophoresis display (EPD). The EPD is also referred to as electronic paper. The EPD uses no backlight, and thus uses no current to maintain its state and consumes less power. The EPD also operates in a wider range of temperatures of about 0 to 50 °C. Note that the EPD operates at a speed of about 250 milliseconds (ms), which is slower than the speed of a liquid crystal shutter but is sufficient for the light shield 6 that typically maintains its light-blocking state.

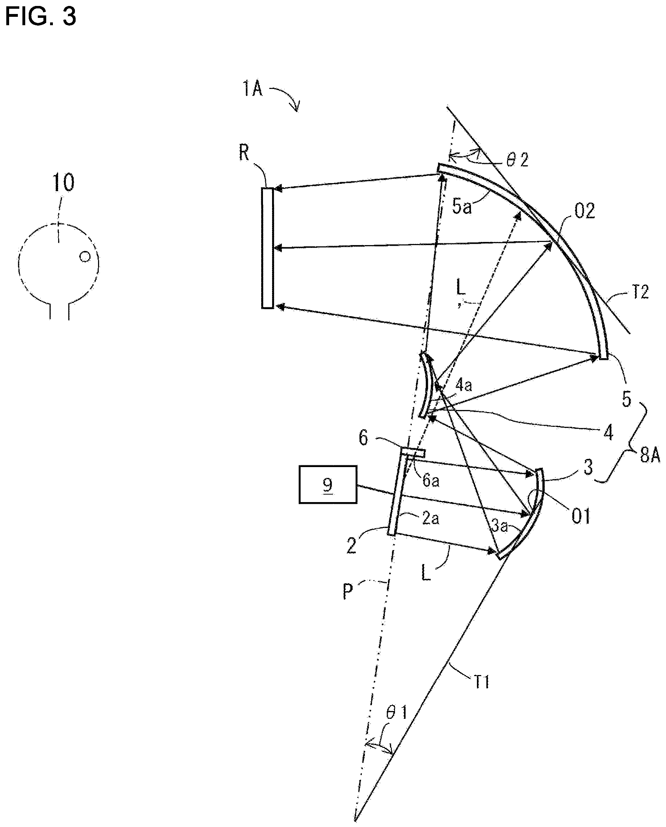

As illustrated in FIG. 1, the light shield 6 has a height (a height from the display surface 2a) that does not overlap the optical path of the image light L forming the aerial image R. In other words, the light shield 6 has a height that does not affect the formation of the aerial image R or cause any part of the aerial image R to be missing. The light shield 6 has a height that does not reach an image light propagation space connecting the entire surface of the reflective surface 3a of the first concave mirror 3 and the entire surface of the reflective surface 5a of the second concave mirror 5. In the structure in FIG. 3, the light shield 6 has a height that does not reach an image light propagation space connecting the entire surface of the reflective surface 3a of the first concave mirror 3, the entire surface of a reflective surface 4a of a convex mirror 4, and the entire surface of the reflective surface 5a of the second concave mirror 5. Note that the light shield 6 may have a height of about 0.1 to 30 mm, but the range is not limited to this.

The shortest distance between the light shield 6 and the optical path of the image light L may be greater than the visible light wavelength (about 360 to 830 nm, or in other words, about 0.36 to 0.83 $\mu$m). When the shortest distance between the light shield 6 and the optical path of the image light L is shorter than the visible light wavelength, a part of the image light L closest to the light shield 6 is diffracted and spreads at an edge of the light shield 6. This increases the likelihood of, for example, distortion or lower luminance at an end of the aerial image R. In contrast, the structure described above reduces the likelihood that a part of the image light L closest to the light shield 6 is diffracted and spreads at an edge of the light shield 6, thus reducing the likelihood of, for example, distortion or lower luminance at an end of the aerial image R. The shortest distance between the light shield 6 and the optical path of the image light L may be about 1 $\mu$m or greater, or may be at least twice the maximum wavelength (about 0.83 $\mu$m) of the visible light wavelength. The maximum length of the shortest distance between the light shield 6 and the optical path of image light L may be any length, but may be about 10 mm, about 3 mm, or about 1 mm to reduce upsizing of the aerial image display device 1.

The aerial image display device 1 includes the reflective optical system 8 including no optical element (e.g., a beam splitter or a polarizing filter) that transmits a part of the image light L. The aerial image R is thus less likely to have lower luminance. The aerial image display device 1 can reduce the luminance of an image displayed on the display surface 2a while sufficiently maintaining the luminance of the aerial image R. The aerial image display device 1 may thus consume less power.

As illustrated in FIG. 1, the aerial image display device 1 includes a controller 9. The controller 9 is connected to each of the components of the aerial image display device 1 to control the component. The components controlled by the controller 9 include the display 2. The controller 9 may have the functions of, for example, turning on and off the display 2, transmitting an image signal to the display 2, and adjusting the luminance, chromaticity, or frame frequency of images. For the display 2 including a heat dissipator or a cooling member, the controller 9 may have the function of adjusting the temperature of the heat dissipator or the cooling member. The controller 9 may control the adjusters in the first concave mirror 3 and the second concave mirror 5.

The controller 9 may include one or more processors. The processors may include a general-purpose processor that reads a specific program to perform a specific function and a processor dedicated to specific processing. The dedicated processor may include an application-specific integrated circuit (ASIC). The processors may include a programmable logic device (PLD). The PLD may include a field-programmable gate array (FPGA). The controller 9 may be a system on a chip (SoC) or a system in a package (SiP) in which one or more processors cooperate with one another.

In the aerial image display device 1, as illustrated in FIG. 1, an imaginary plane P including a display surface 2a has a tilt angle $\theta2$ with respect to the second concave mirror 5 and a tilt angle $\theta1$ with respect to the first concave mirror 3. The tilt angle $\theta2$ may be greater than the tilt angle $\theta1$. The tilt angle $\theta2$ is the angle formed between the imaginary plane P and a tangent plane T2 of the second concave mirror 5. The tangent plane T2 is a plane tangent to the reflective surface 5a of the second concave mirror 5 and at a vertex (also referred to as an original point of the freeform surface) O2 of the reflective surface 5a. The tilt angle $\theta1$ is the angle formed between the imaginary plane P and a tangent plane T1 of the first concave mirror 3. The tangent plane T1 is a plane tangent to the reflective surface 3a of the first concave mirror 3 and at a vertex O1 of the reflective surface 3a. With the tilt angle $\theta1$ greater than the tilt angle $\theta2$ in the aerial image display device 1, most of the image light L emitted from the display surface 2a travels toward the first concave mirror 3. The image light L is thus more likely to be incident on the first concave mirror 3 and less likely to be directly incident on the second concave mirror 5. This reduces the likelihood of ghost images and virtual images and reduces the likelihood of lowering the viewability of the aerial image R. Note that, in the structure in FIG. 1, the tilt angle $\theta1$ may be about 30 to 60°, and the tilt angle $\theta2$ may be about 70 to 110°. However, the ranges are not limited to these.

In the aerial image display device 1, the reflective surface 3a of the first concave mirror 3 has a curvature Sa1, and the reflective surface 5a of the second concave mirror 5 has a curvature Sa2. The curvature Sa1 may be greater than the curvature Sa2. With the curvature Sa1 being relatively larger, the first concave mirror 3 that reflects the image light L emitted from the display 2 in a direction different from the direction toward the display 2 can be located closer to the display 2. This reduces the space occupied by the display 2 and the reflective optical system 8, thus reducing the size of the aerial image display device 1. The aerial image display device 1 having a smaller size reduces the optical path length of the image light L between the display surface 2a of the display 2 and the reflective surface 5a of the second concave mirror 5, thus reducing the loss of the image light L due to, for example, unintended scatter or interference. The aerial image display device 1 can thus have higher display quality.

As illustrated in FIG. 2, the curvature Sa1 of the first concave mirror 3 is defined by a value of $D_{MAX}/H$, where $D_{MAX}$ is a maximum value of a length (also referred to as a maximum depth) in a direction along an optical axis OA between a point on the reflective surface 3a and a line segment LS, and the line segment LS has a length of $2 \times H$. The line segment LS includes the center of the reflective surface 3a and connects both ends of the reflective surface 3a in a cross section taken along the optical axis of the image light L incident on the first concave mirror 3. A maximum value of $D_{MAX}/H$ among the values obtained at different cross-sectional positions may be defined as the curvature Sa1. The curvature Sa2 is also defined in the same manner as or in a similar manner to the curvature Sa1.

The second concave mirror 5 may overlap the display 2 and the first concave mirror 3 when viewed from the rear surface of the second concave mirror 5 in a direction parallel to the virtual imaging plane of the aerial image R (a vertical direction in FIG. 1). This structure reduces the space occupied by the display 2 and the reflective optical system 8, thus reducing the size of the aerial image display device 1. This reduces the optical path length of the image light L inside the aerial image display device 1, thus reducing the loss of the image light L due to, for example, unintended scatter or interference. The aerial image display device 1 can thus have higher display quality.

An aerial image display device according to another embodiment of the present disclosure will now be described. FIG. 3 is a diagram of an aerial image display device according to another embodiment of the present disclosure. An aerial image display device 1A according to the present embodiment has the same components as or similar components to those of the aerial image display device 1 according to the above embodiment except for the structures of the reflective optical system. Such components will not be described.

In the present embodiment, the aerial image display device 1A includes the display 2, the first concave mirror 3, the convex mirror 4, the second concave mirror 5, and the light shield 6.

A reflective optical system including the first concave mirror 3, the convex mirror 4, and the second concave mirror 5 forms the aerial image R from the image light L emitted from the display 2. The first concave mirror 3, the convex mirror 4, and the second concave mirror 5 may be hereafter collectively referred to as a reflective optical system 8A.

The first concave mirror 3 is located on an optical path of the image light L emitted from the display 2. The first concave mirror 3 is configured to reflect, in a direction different from a direction toward the display 2, the image light L emitted from the display 2. The first concave mirror 3 may include an adjuster to adjust its spatial arrangement relative to the display 2 (e.g., the distance from the display surface 2a and the tilt angle with respect to the display surface 2a). The adjuster may include, for example, a support such as a rod located on a rear surface of the first concave mirror 3, a shaft located on the support to rotate the support and the first concave mirror 3, and a slider to translate the support and the first concave mirror 3. The adjuster may be manually adjustable, or electrically adjustable with, for example, a stepping motor.

The convex mirror 4 is located on the optical path of the image light L reflected from the first concave mirror 3. The convex mirror 4 is located between the display 2 and the second concave mirror 5. The convex mirror 4 is configured to reflect, in a direction different from a direction toward the first concave mirror 3, the image light L reflected from the first concave mirror 3. The convex mirror 4 may include an adjuster that adjusts the spatial arrangement of the convex mirror 4 relative to the first concave mirror 3 (e.g., the distance from the first concave mirror 3 and the tilt angle with respect to the first concave mirror 3). The adjuster may have the same structure as or a similar structure to the adjuster in the first concave mirror 3.

The second concave mirror 5 is located on the optical path of the image light L reflected from the convex mirror 4. The second concave mirror 5 is configured to reflect, in a direction different from a direction toward the convex mirror 4, the image light L reflected from the convex mirror 4 to form the aerial image R as a real image. The second concave mirror 5 may include an adjuster that adjusts the spatial arrangement of the second concave mirror 5 relative to the convex mirror 4 (e.g., the distance from the convex mirror 4 and the tilt angle with respect to the convex mirror 4). The adjuster may have the same structure as or a similar structure to the adjuster in the first concave mirror 3.

The first concave mirror 3 includes the reflective surface 3a, the convex mirror 4 includes a reflective surface, and the second concave mirror 5 includes the reflective surface 5a. Each of the first concave mirror 3, the convex mirror 4, and the second concave mirror 5 may be a freeform mirror including the reflective surface 3a, 4a, or 5a having a shape expressed by the above Formulas 1 and 2. In this case, the reflective surfaces 3a, 4a, and 5a having appropriately designed shapes can reduce distortion of the aerial image R.

The light shield 6 is located between the display 2 and the second concave mirror 5. The light shield 6 is located off the optical path of the image light L extending from the display surface 2a to the aerial image R through the first concave mirror 3, the convex mirror 4, and the second concave mirror 5, or in other words, located off the optical path of light for forming the aerial image R. The light shield 6 is not located at a position at which the light shield 6 blocks formation of the aerial image R, and thus does not reduce the viewability of the aerial image R. The light shield 6 blocks the image light L' traveling directly from the display surface 2a to the second concave mirror 5. The light shield 6 in the aerial image display device 1A may have the same structure as or a similar structure to the light shield 6 in the aerial image display device 1.

The light shield 6 blocks the image light L' traveling directly from the display surface 2a to the second concave mirror 5. The aerial image display device 1A can thus reduce the likelihood that the image light L emitted from the display surface 2a reaches the second concave mirror 5 without being reflected from the first concave mirror 3 or the convex mirror 4 and is unintendedly reflected from the second concave mirror 5. This reduces the likelihood of a ghost image or a virtual image being viewed with the eyes of the user 10 and lowering the viewability of the aerial image R.

The convex mirror 4 can block at least a part of the image light L' traveling from the display surface 2a to the second concave mirror 5 when the light shield 6 does not sufficiently block the image light L'. The aerial image display device 1A can thus more effectively reduce the likelihood that a part of the image light L emitted from the display surface 2a reaches the second concave mirror 5 without being reflected from the first concave mirror 3 or the convex mirror 4 and is reflected from the second concave mirror 5 in an unintended direction and to an unintended position. This structure can reduce the likelihood of lowering the viewability of the aerial image R more effectively. Note that in the structure in FIG. 3, the tilt angle $\theta 1$ may be about 10 to 35°, and the tilt angle $\theta 2$ may be about 30 to 70°, but the ranges are not limited to these.

The aerial image display device 1A includes the reflective optical system 8A including no optical element (e.g., a beam splitter or a polarizing filter) that transmits a part of the image light L. The aerial image R is thus less likely to have lower luminance. The aerial image display device 1A can reduce the luminance of an image displayed on the display surface 2a while sufficiently maintaining the luminance of the aerial image R. The aerial image display device 1A may thus consume less power.

In the aerial image display device 1A, the imaginary plane P including the display surface 2a has the tilt angle $\theta 2$ with respect to the second concave mirror 5 and the tilt angle $\theta 1$ with respect to the first concave mirror 3. The tilt angle $\theta 2$ may be greater than the tilt angle $\theta 1$. The tilt angles $\theta 1$ and $\theta 2$ are defined in the same manner as or in a similar manner to the tilt angles $\theta 1$ and $\theta 2$ described above. With the tilt angle $\theta 1$ greater than the tilt angle $\theta 2$ in the aerial image display device 1A, most of the image light L emitted from the display surface 2a travels toward the first concave mirror 3. The image light L is thus more likely to be incident on the first concave mirror 3 and less likely to be directly incident on the second concave mirror 5. This reduces the likelihood of ghost images and virtual images and reduces the likelihood of lowering the viewability of the aerial image R.

The aerial image display device 1A includes the reflective optical system 8A including three mirrors. This increases flexibility in spatially arranging the display 2 and the second concave mirror 5 with respect to each other. This allows the tilt angle $\theta 2$ of the imaginary plane P with respect to the second concave mirror 5 to be 90° or a degree close to 90°, thus reducing the likelihood that a part of the image light L emitted from the display surface 2a propagates directly toward the second concave mirror 5.

In the aerial image display device 1A, the reflective surface 3a of the first concave mirror 3 has the curvature Sa1, the convex mirror 4 has a curvature Sb, and the reflective surface 5a of the second concave mirror 5 has the curvature Sa2. The curvature Sa1 may be greater than the curvature Sa2, and the curvature Sa2 may be greater than the curvature Sb. The curvatures Sa1, Sb, and Sa2 are defined in the same manner as or in a similar manner to the curvatures Sa1 and Sa2 described above. With the curvature Sa1 greater than the curvature Sa2 and the curvature Sb, the first concave mirror 3 that reflects the image light L emitted from the display 2 in a direction different from the direction toward the display 2 can be located closer to the display 2. This structure reduces the space occupied by the display 2 and the reflective optical system 8A, thus reducing the size of the aerial image display device 1A. The aerial image display device 1A having a smaller size reduces the optical path length of the image light L between the display surface 2a of the display 2 and the reflective surface 5a of the second concave mirror 5, thus reducing the loss of the image light L due to, for example, unintended scatter or interference. The aerial image display device 1A can thus have higher display quality.

The convex mirror 4 easily increases divergence of the image light L and thus easily increases distortion of the aerial image R. With the curvature Sa2 smaller than the curvature Sa1 and the curvature Sa2, the aerial image display device 1A can reduce an increase in the distortion of the aerial image R caused by the convex mirror 4. The aerial image display device 1A can thus have higher display quality. The relatively smaller curvature Sb of the convex mirror 4 can also reduce the divergence of the image light L reflected from the convex mirror 4. The second concave mirror 5 that reflects the image light L reflected from the convex mirror 4. can avoid being upsized.

The second concave mirror 5 may overlap the display 2, the first concave mirror 3, and the convex mirror 4 when viewed from the rear surface of the second concave mirror 5 in a direction parallel to the virtual imaging plane of the aerial image R (a vertical direction in FIG. 3). This reduces the space occupied by the display 2 and the reflective optical system 8A, thus reducing the size of the aerial image display device 1A. This reduces the optical path length of the image light L inside the aerial image display device 1A, thus reducing the loss of the image light L due to, for example, unintended scatter or interference. The aerial image display device 1A can thus have still higher display quality.

In the aerial image display device 1A illustrated in FIG. 3, the light shield 6 may have electrically adjustable light transmittance. For example, the light shield 6 may be a liquid crystal shutter including the polymeric liquid crystal described above, or an EPD.

In the aerial image display device 1A illustrated in FIG. 3, the shortest distance between the light shield 6 and the optical path of the image light L may be greater than the visible light wavelength (about 360 to 830 nm, or in other words, about 0.36 to 0.83 $\mu$m). When the shortest distance between the light shield 6 and the optical path of the image light L is shorter than the visible light wavelength, a part of the image light L closest to the light shield 6 is diffracted and spreads at an edge of the light shield 6. This increases the likelihood of, for example, distortion or lower luminance at an edge of the aerial image R. In contrast, the structure described above reduces the likelihood that a part of the image light L closest to the light shield 6 is diffracted and spreads at an end of the light shield 6, thus reducing the likelihood of, for example, distortion or lower luminance at an end of the aerial image R. The shortest distance between the light shield 6 and the optical path of the image light L may be about 1 μm or greater, or may be at least twice the maximum wavelength (about 0.83 μm) of the visible light wavelength. The maximum length of the shortest distance between the light shield 6 and the optical path of the image light L may be any length, but may be about 10 mm, about 3 mm, or about 1 mm to reduce upsizing of the aerial image display device 1A.

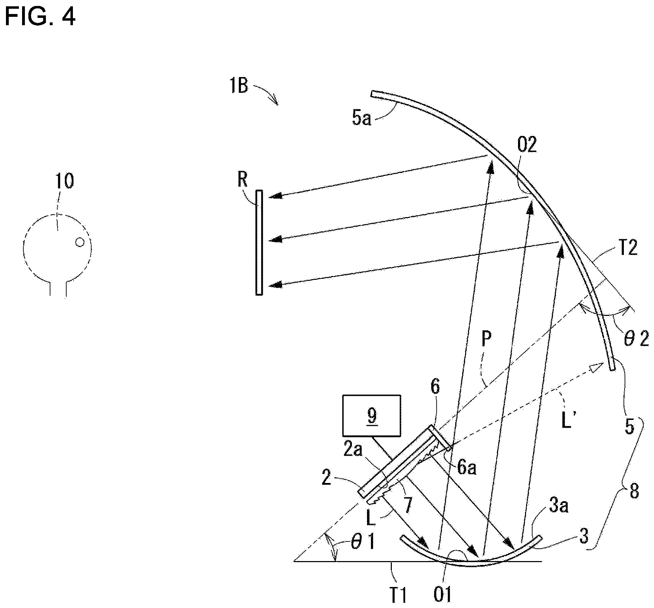

An aerial image display device according to still another embodiment of the present disclosure will now be described. FIG. 4 is a cross-sectional view of an aerial image display device according to still another embodiment of the present disclosure, illustrating its main components. An aerial image display device 1B according to the present embodiment has the same components as or similar components to those of the aerial image display device 1 according to the above embodiment except for the structures of the reflective optical system. Such components will not be described.

The aerial image display device 1B includes the display 2, the first concave mirror 3, the second concave mirror 5, and a focusing member 7. The first concave mirror 3 and the second concave mirror 5 have the same structures as or similar structures to the first concave mirror 3 and the second concave mirror 5 in the aerial image display device 1.

The focusing member 7 is located between the display 2 and the first concave mirror 3. The focusing member 7 may be located closer to the display surface 2a outside the display 2 or may be located inside the display 2. The focusing member 7 substantially collimates the image light L emitted from the display surface 2a and causes the image light L to propagate toward the first concave mirror 3.

The focusing member 7 may be, for example, a plano-convex lens, a biconvex lens, or a Fresnel lens. The focusing member 7 that is a Fresnel lens can be thinner, thus reducing the size of the aerial image display device 1B. For the display 2 that is a liquid crystal display device including a backlight and a liquid crystal panel, the focusing member 7 may be located between the backlight and the liquid crystal panel. A surface of the focusing member 7 facing the display surface 2a (or in other words, an incident surface of the image light L) may include an anti-reflection film (anti-reflection coating). Note that a Fresnel lens is a thinner lens with concentric annular sections formed by diving a typical convex lens, and has a saw-toothed cross section. A Fresnel lens can be still thinner by increasing the number of concentric annular sections, or in other words, by diving the lens into more concentric annular sections.

The focusing member 7 reduces the likelihood that a part of the image light L emitted from the display surface 2a propagates directly toward the second concave mirror 5. The aerial image display device 1 can thus reduce the likelihood that the image light L emitted from the display surface 2a reaches the second concave mirror 5 without being reflected from the first concave mirror 3 and is reflected from the second concave mirror 5 in an unintended direction and to an unintended position. This reduces the likelihood of a ghost image or a virtual image being viewed with the eyes of the user 10 and lowering of the viewability of the aerial image R. The aerial image display device 1B including no light shield 6 can increase flexibility in spatially arranging the display 2 relative to the reflective optical system 8 including the first concave mirror 3 and the second concave mirror 5. This reduces the size of the aerial image display device 1B.

The focusing member 7 may be movable in an optical axis direction of the image light L. In this case, the parallelism of the image light L is adjustable with the focusing member 7. A device for moving the focusing member 7 may include a stepping motor, a linear motor, an ultrasonic motor, a rail, or a slider. The device for moving the focusing member 7 may include an adjuster, such as a knob or a screw, that is manually adjustable to move the focusing member 7.

In the aerial image display device 1B, as illustrated in FIG. 4, the imaginary plane P including the display surface 2a has the tilt angle θ2 with respect to the second concave mirror 5 and the tilt angle θ1 with respect to the first concave mirror 3. The tilt angle θ2 may be greater than the tilt angle θ1. The tilt angles θ1 and θ2 are defined in the same manner as or in a similar manner to the tilt angles θ1 and θ2 described above. With the tilt angle θ1 greater than the tilt angle θ2 in the aerial image display device 1B, most of the image light L emitted from the display surface 2a travels toward the first concave mirror 3. The image light L is thus more likely to be incident on the first concave mirror 3 and less likely to be directly incident on the second concave mirror 5. This reduces the likelihood of ghost images and virtual images and lowering the viewability of the aerial image R. Note that in the structure in FIG. 4, the tilt angle θ1 may be about 25 to 55°, and the tilt angle θ2 may be about 70 to 110°, but the ranges are not limited to these.

The aerial image display device 1B may include the light shield 6. This structure further reduces the likelihood that a part of the image light L emitted from the display surface 2a propagates directly toward the second concave mirror 5. This further reduces the likelihood of a ghost image or a virtual image being viewed with the eyes of the user 10 and lowering the viewability of the aerial image R.

In the aerial image display device 1B, the reflective surface 3a of the first concave mirror 3 has the curvature Sa1, and the reflective surface 5a of the second concave mirror 5 has the curvature Sa2. The curvature Sa1 may be greater than the curvature Sa2. The curvatures Sa1 and Sa2 are defined in the same manner as or in a similar manner to the curvatures Sa1 and Sa2 described above. With the curvature Sa1 being relatively larger, the first concave mirror 3 that reflects the image light L emitted from the display 2 in a direction different from the direction toward the display 2 can be located closer to the display 2. This structure reduces the space occupied by the display 2 and the reflective optical system 8 (the first concave mirror 3 and the second concave mirror 5), thus reducing the size of the aerial image display device 1B. The aerial image display device 1B having a smaller size reduces the optical path length of the image light L between the display surface 2a of the display 2 and the reflective surface 5a of the second concave mirror 5, thus reducing the loss of the image light L due to, for example, unintended scatter or interference. The aerial image display device 1B can thus have higher display quality.

The second concave mirror 5 may overlap the display 2 and the first concave mirror 3 when viewed from the rear surface of the second concave mirror 5 in a direction parallel to the virtual imaging plane of the aerial image R (a vertical direction in FIG. 4). This structure reduces the space occupied by the display 2 and the reflective optical system 8, thus reducing the size of the aerial image display device 1B. This reduces the optical path length of the image light L inside the aerial image display device 1B, thus reducing the loss of the image light L due to, for example, unintended scatter or interference. The aerial image display device 1B can thus have higher display quality.

The aerial image display devices 1, 1A, and 1B allow operating aerial images with no touch operation such as touching a button, and may thus be used in, but not limited to, products in various fields as described below. Examples of such products include a communication device for communication or conversations using aerial images, a medical interview device that allows doctors to interview patients using aerial images, a navigation device and a driving control device for vehicles such as automobiles, an order reception and registration device used in, for example, shops, an operational panel used in, for example, buildings or elevators, a learning device for teaching or taking classes using aerial images, an office device for business communication or instructions using aerial images, a gaming device used for playing games using aerial images, a projector for projecting images on the ground or walls in, for example, amusement parks or game arcades, a simulation device for simulation using aerial images at, for example, universities or medical organizations, a large display for displaying prices and other information in, for example, markets or stock exchanges, and an image viewing device used for viewing aerial images.

The structure according to one or more embodiments of the present disclosure may have aspects (1) to (13) described below.

(1) An aerial image display device, comprising:

a display including a display surface;
a first concave mirror configured to reflect, in a direction different from a direction toward the display, image light emitted from the display surface;
a second concave mirror configured to reflect, in a direction different from a direction toward the first concave mirror, the image light reflected from the first concave mirror and form an aerial image as a real image from the image light; and
a light shield between the display and the second concave mirror, the light shield being located off an optical path of the image light extending from the display surface to the aerial image through the first concave mirror and the second concave mirror.

(2) The aerial image display device according to (1), wherein
an imaginary plane including the display surface has a greater tilt angle with respect to the second concave mirror than with respect to the first concave mirror.

(3) The aerial image display device according to (1) or (2), wherein
the light shield has electrically adjustable light transmittance.

(4) The aerial image display device according to any one of (1) to (3), wherein
a shortest distance between the light shield and the optical path of the image light is greater than a visible light wavelength.

(5) An aerial image display device, comprising:

a display including a display surface;
a first concave mirror configured to reflect, in a direction different from a direction toward the display, image light emitted from the display surface;
a convex mirror configured to reflect, in a direction different from a direction toward the first concave mirror, the image light reflected from the first concave mirror;
a second concave mirror configured to reflect, in a direction different from a direction toward the convex mirror, the image light reflected from the convex mirror and form an aerial image as a real image from the image light; and
a light shield between the display and the second concave mirror, the light shield being located off an optical path of the image light extending from the display surface to the aerial image through the first concave mirror, the convex mirror, and the second concave mirror,
wherein the convex mirror is between the light shield and the second concave mirror.

(6) The aerial image display device according to (5), wherein
an imaginary plane including the display surface has a greater tilt angle with respect to the second concave mirror than with respect to the first concave mirror.
(7) The aerial image display device according to (5) or (6), wherein
the light shield has electrically adjustable light transmittance.
(8) The aerial image display device according to any one of (5) to (7), wherein
a shortest distance between the light shield and the optical path of the image light is greater than a visible light wavelength.
(9) An aerial image display device, comprising:

a display including a display surface;
a first concave mirror configured to reflect, in a direction different from a direction toward the display, image light emitted from the display surface;
a second concave mirror configured to reflect, in a direction different from a direction toward the first concave mirror, the image light reflected from the first concave mirror and form an aerial image as a real image from the image light; and
a focusing member between the display and the first concave mirror, the focusing member being configured to collimate the image light emitted from the display surface.

(10) The aerial image display device according to (9), wherein
an imaginary plane including the display surface has a greater tilt angle with respect to the second concave mirror than with respect to the first concave mirror.
(11) The aerial image display device according to (9) or (10), wherein
the focusing member is movable in an optical axis direction of the image light.
(12) The aerial image display device according to any one of (9) to (11), wherein
the focusing member is a Fresnel lens.
(13) The aerial image display device according to any one of (9) to (12), wherein

the display is a liquid crystal display including a backlight and a liquid crystal panel, and
the focusing member is between the backlight and the liquid crystal panel.

The aerial image display device according to one or more embodiments of the present disclosure includes the light shield or the focusing member. This structure reduces a ghost image and a virtual image caused by a part of the image light traveling in an unintended direction and to an unintended position. This reduces the likelihood of lowering the viewability of the aerial image.

Although the embodiments of the present disclosure have been described in detail, the present disclosure is not limited to the embodiments described above, and may be changed or varied in various manners without departing from the spirit and scope of the present disclosure. For example, the aerial image display devices 1 and 1A may include a focusing member 7. This structure can reduce the likelihood of lowering the viewability of the aerial image R more effectively.

REFERENCE SIGNS

| 1, 1A, 1B | aerial image display device |
|---|---|
| 2 | display |
| 2a | display surface |
| 3 | first concave mirror |
| 3a | reflective surface |
| 4 | convex mirror |
| 4a | reflective surface |
| 5 | second concave mirror |
| 5a | reflective surface |
| 6 | light shield |
| 6a | light-blocking surface |

| 7 | focusing member |
| 8, 8A | reflective optical system |
| 9 | controller |
| 10 | user |
| R | aerial image |

**Claims**

1. An aerial image display device, comprising:

   a display including a display surface;
   a first concave mirror configured to reflect, in a direction different from a direction toward the display, image light emitted from the display surface;
   a second concave mirror configured to reflect, in a direction different from a direction toward the first concave mirror, the image light reflected from the first concave mirror and form an aerial image as a real image from the image light; and
   a light shield between the display and the second concave mirror, the light shield being located off an optical path of the image light extending from the display surface to the aerial image through the first concave mirror and the second concave mirror.

2. The aerial image display device according to claim 1, wherein
   an imaginary plane including the display surface has a greater tilt angle with respect to the second concave mirror than with respect to the first concave mirror.

3. The aerial image display device according to claim 1 or claim 2, wherein
   the light shield has electrically adjustable light transmittance.

4. The aerial image display device according to any one of claims 1 to 3, wherein
   a shortest distance between the light shield and the optical path of the image light is greater than a visible light wavelength.

5. An aerial image display device, comprising:

   a display including a display surface;
   a first concave mirror configured to reflect, in a direction different from a direction toward the display, image light emitted from the display surface;
   a convex mirror configured to reflect, in a direction different from a direction toward the first concave mirror, the image light reflected from the first concave mirror;
   a second concave mirror configured to reflect, in a direction different from a direction toward the convex mirror, the image light reflected from the convex mirror and form an aerial image as a real image from the image light; and
   a light shield between the display and the second concave mirror, the light shield being located off an optical path of the image light extending from the display surface to the aerial image through the first concave mirror, the convex mirror, and the second concave mirror,
   wherein the convex mirror is between the light shield and the second concave mirror.

6. The aerial image display device according to claim 5, wherein
   an imaginary plane including the display surface has a greater tilt angle with respect to the second concave mirror than with respect to the first concave mirror.

7. The aerial image display device according to claim 5 or claim 6, wherein
   the light shield has electrically adjustable light transmittance.

8. The aerial image display device according to any one of claims 5 to 7, wherein
   a shortest distance between the light shield and the optical path of the image light is greater than a visible light wavelength.

9. An aerial image display device, comprising:

a display including a display surface;
a first concave mirror configured to reflect, in a direction different from a direction toward the display, image light emitted from the display surface;
a second concave mirror configured to reflect, in a direction different from a direction toward the first concave mirror, the image light reflected from the first concave mirror and form an aerial image as a real image from the image light; and
a focusing member between the display and the first concave mirror, the focusing member being configured to collimate the image light emitted from the display surface.

10. The aerial image display device according to claim 9, wherein
an imaginary plane including the display surface has a greater tilt angle with respect to the second concave mirror than with respect to the first concave mirror.

11. The aerial image display device according to claim 9 or claim 10, wherein
the focusing member is movable in an optical axis direction of the image light.

12. The aerial image display device according to any one of claims 9 to 11, wherein
the focusing member is a Fresnel lens.

13. The aerial image display device according to any one of claims 9 to 12, wherein

the display is a liquid crystal display including a backlight and a liquid crystal panel, and
the Fresnel lens is between the backlight and the liquid crystal panel.

FIG. 1

## FIG. 2

FIG. 3

FIG. 4

## INTERNATIONAL SEARCH REPORT

| International application No. |
| --- |
| **PCT/JP2023/033452** |

| A. | CLASSIFICATION OF SUBJECT MATTER |
| --- | --- |

***G02B 30/56***(2020.01)i; ***G02B 5/00***(2006.01)i; ***G09F 9/00***(2006.01)i
FI:  G02B30/56; G09F9/00 313; G02B5/00 B

According to International Patent Classification (IPC) or to both national classification and IPC

| B. | FIELDS SEARCHED |
| --- | --- |

Minimum documentation searched (classification system followed by classification symbols)

G02B30/56; G02B5/00; G09F9/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| Y | JP 2004-117780 A (SAMY KK) 15 April 2004 (2004-04-15) | 1, 3-4 |
|  | paragraphs [0009]-[0016], fig. 1 | |
| A | paragraphs [0009]-[0016], fig. 1 | 2, 5-8 |
| Y | US 5311357 A (IMAGE TECHNOLOGY ASSOCIATES) 10 May 1994 (1994-05-10) | 1-4, 9-10, 12-13 |
|  | column 1, line 1 to column 4, line 30, column 4, line 47 to column 5, line 11, fig. 1, 4 | |
| A | column 1, line 1 to column 4, line 30, column 4, line 47 to column 5, line 11, fig. 1, 4 | 5-8 |
| Y | JP 2002-282478 A (SAMY KK) 02 October 2002 (2002-10-02) | 1-4 |
|  | paragraph [0021], fig. 1 | |
| A | paragraph [0021], fig. 1 | 5-8 |
| Y | JP 2015-194601 A (SONY CORP) 05 November 2015 (2015-11-05) | 1-4 |
|  | paragraphs [0035]-[0039], fig. 8-9 | |
| A | paragraphs [0035]-[0039], fig. 8-9 | 5-8 |

| ✓ | Further documents are listed in the continuation of Box C. | ✓ | See patent family annex. |
| --- | --- | --- | --- |

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **13 November 2023** | **28 November 2023** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

EP 4 597 207 A1

## INTERNATIONAL SEARCH REPORT

| International application No. |
| --- |
| **PCT/JP2023/033452** |

### C. DOCUMENTS CONSIDERED TO BE RELEVANT

| Category* | Citation of document, with indication, where appropriate, of the relevant passages | Relevant to claim No. |
| --- | --- | --- |
| Y | JP 2021-117295 A (SAMSUNG ELECTRONICS CO., LTD.) 10 August 2021 (2021-08-10) paragraph [0024] | 3-4 |
| A | paragraph [0024] | 7-8 |
| Y | JP 2003-15508 A (JAPAN BROADCASTING CORP) 17 January 2003 (2003-01-17) paragraph [0025] | 3-4 |
| A | paragraph [0025] | 7-8 |
| Y | JP 2019-139129 A (YAZAKI CORP) 22 August 2019 (2019-08-22) paragraph [0030], fig. 1 | 4 |
| A | paragraph [0030], fig. 1 | 8 |
| Y | JP 2020-46679 A (MAXELL HOLDINGS LTD) 26 March 2020 (2020-03-26) paragraphs [0048]-[0049] | 4 |
| A | paragraphs [0048]-[0049] | 8 |
| A | JP 7-191274 A (CANON INC) 28 July 1995 (1995-07-28) paragraphs [0030], [0044]-[0045], fig. 2 | 5-8 |
| A | JP 2013-222025 A (DAINIPPON SCREEN MFG CO LTD) 28 October 2013 (2013-10-28) paragraphs [0015]-[0036], fig. 1-4 | 5-8 |
| X | CN 112835199 A (ZHEJIANG CRYSTAL-OPTECH CO., LTD.) 25 May 2021 (2021-05-25) paragraphs [0015]-[0064], fig. 1-5 | 9, 12-13 |
| Y | paragraphs [0015]-[0064], fig. 1-5 | 9-13 |
| Y | JP 2019-12251 A (PIXIE DUST TECH INC) 24 January 2019 (2019-01-24) paragraphs [0057]-[0060], fig. 6 | 11 |
| A | JP 2002-511596 A (HOLO GONE LLC) 16 April 2002 (2002-04-16) paragraphs [0016]-[0033], fig. 2 | 1-13 |

Form PCT/ISA/210 (second sheet) (January 2015)

18

# EP 4 597 207 A1

## INTERNATIONAL SEARCH REPORT

| International application No. |
| --- |
| **PCT/JP2023/033452** |

**Box No. III    Observations where unity of invention is lacking (Continuation of item 3 of first sheet)**

This International Searching Authority found multiple inventions in this international application, as follows:

Document 1: JP 2004-117780 A (SAMY KK) 15 April 2004 (2004-04-15) paragraphs [0009]-[0016], fig. 1 (Family: none)

(Invention 1) Claims 1-8
   Claims 1-8 have the special technical feature of an aerial image display apparatus provided with: a display device having a display surface; a first concave mirror that reflects image light emitted from the display surface in a direction different from the direction toward the display device; and a second concave mirror that forms an image of the image light reflected by the first concave mirror as an aerial image of the real image, wherein the aerial image display apparatus comprises a "light blocking member located between the display device and the second concave mirror and not located in an optical path of the image light that reaches the aerial image from the display surface through the first concave mirror and the second concave mirror" and are thus classified as invention 1.

(Invention 2) Claims 9-13
   Claims 9-13 share, with claim 1 classified as invention 1, the common technical feature of an aerial image display apparatus provided with: "a display device having a display surface; a first concave mirror that reflects image light emitted from the display surface in a direction different from the direction toward the display device; and a second concave mirror that reflects the image light reflected from the first concave mirror in a direction different from the direction toward the first concave mirror and forms an image as an aerial image of the real image." However, said technical feature does not make a contribution over the prior art in light of the disclosure of document 1, and thus cannot be considered a special technical feature. Also, there are no other same or corresponding special technical features between these inventions.
   In addition, claims 9-13 are not dependent on claim 1. Furthermore, claims 9-12 are not substantially identical to or similarly closely related to any of the claims classified as invention 1.
   Therefore, claims 9-13 cannot be classified as invention 1.
   Also, claims 9-13 have the special technical feature of an aerial image display apparatus provided with: a display device having a display surface; a first concave mirror that reflects image light emitted from the display surface in a direction different from the direction toward the display device; and a second concave mirror that reflects the image light reflected from the first concave mirror in a direction different from the direction toward the first concave mirror and forms an image as an aerial image of the real image" wherein the aerial image display apparatus comprises a light condensing member that is located between the display device and the first concave mirror and collimates the image light emitted from the display surface" and are thus classified as invention 2.

Form PCT/ISA/210 (continuation of first sheet) (January 2015)

## INTERNATIONAL SEARCH REPORT

| International application No. |
| --- |
| **PCT/JP2023/033452** |

**Box No. III**      **Observations where unity of invention is lacking (Continuation of item 3 of first sheet)**

1. ☑ As all required additional search fees were timely paid by the applicant, this international search report covers all searchable claims.

2. ☐ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest**     ☐ The additional search fees were accompanied by the applicant's protest and, where applicable, the payment of a protest fee.

                                     ☐ The additional search fees were accompanied by the applicant's protest but the applicable protest fee was not paid within the time limit specified in the invitation.

                                       ☑ No protest accompanied the payment of additional search fees.

Form PCT/ISA/210 (continuation of first sheet) (January 2015)

## INTERNATIONAL SEARCH REPORT
### Information on patent family members

International application No.

**PCT/JP2023/033452**

| Patent document<br>cited in search report | | | Publication date<br>(day/month/year) | Patent family member(s) | | | Publication date<br>(day/month/year) |
|---|---|---|---|---|---|---|---|
| JP | 2004-117780 | A | 15 April 2004 | (Family: none) | | | |
| US | 5311357 | A | 10 May 1994 | DE | 4228451 | A1 | |
| JP | 2002-282478 | A | 02 October 2002 | (Family: none) | | | |
| JP | 2015-194601 | A | 05 November 2015 | US | 2017/0099480 | A1 | |
| | | | | paragraphs [0070]-[0074], fig.<br>8-9 | | | |
| | | | | CN | 106164750 | A | |
| JP | 2021-117295 | A | 10 August 2021 | (Family: none) | | | |
| JP | 2003-15508 | A | 17 January 2003 | (Family: none) | | | |
| JP | 2019-139129 | A | 22 August 2019 | US | 2020/0338987 | A1 | |
| | | | | paragraph [0035], fig. 1 | | | |
| | | | | EP | 3754413 | A1 | |
| | | | | CN | 111602083 | A | |
| JP | 2020-46679 | A | 26 March 2020 | (Family: none) | | | |
| JP | 7-191274 | A | 28 July 1995 | US | 5663833 | A | |
| | | | | column 7, lines 9-34, column<br>11, line 42 to column 12, line<br>9, fig. 8 | | | |
| | | | | EP | 660155 | A1 | |
| | | | | DE | 69430983 | T2 | |
| JP | 2013-222025 | A | 28 October 2013 | (Family: none) | | | |
| CN | 112835199 | A | 25 May 2021 | (Family: none) | | | |
| JP | 2019-12251 | A | 24 January 2019 | (Family: none) | | | |
| JP | 2002-511596 | A | 16 April 2002 | US | 6497484 | B1 | |
| | | | | column 3, line 24 to column 6,<br>line 20, fig. 2 | | | |
| | | | | WO | 1999/053346 | A2 | |
| | | | | EP | 1071975 | A4 | |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2018043673 A